# EUROPEAN PATENT SPECIFICATION

(11) **EP 4 408 167 B1**
(45) Date of publication and mention of the grant of the patent: **31.12.2025**
(21) Application number: 22786544.1
(22) Date of filing: 29.09.2022
(51) Int. Cl.: A01K 15/02, A23K 10/30, A23K 40/00, A23K 50/42, A23K 40/20, A23K 40/25

(54) **PET CHEW AND METHOD FOR PRODUCING A PET CHEW**
KAUSNACK FÜR HAUSTIERE UND VERFAHREN ZUR HERSTELLUNG VON KAUSNACKS FÜR HAUSTIERE
ARTICLE À MÂCHER POUR ANIMAL DOMESTIQUE ET PROCÉDÉ DE PRODUCTION D'UN ARTICLE À MÂCHER POUR ANIMAL DOMESTIQUE

(30) Priority: 30.09.2021 US 202163250747 P; 24.11.2021 EP 21210209
(43) Date of publication of application: 07.08.2024
(73) Proprietor: Paragon Pet Products Europe B.V., 9641 MN Veendam (NL)
(72) Inventor: MÜLLER-OHL, Felix Johannes Gerhard, 9641 MN Veendam (NL); OLDENGARM, Sander Hilbert, 9641 MN Veendam (NL); KEAN, Gregory George, 9641 MN Veendam (NL); FREIJE, Janjaap, 9641 MN Veendam (NL)
(74) Representative: V.O.
(86) International application number: PCT/NL2022/050544
(87) International publication number: WO 2023/055233

(56) References cited:
- EP-B1- 4 159 030
- WO-A1-2021/177905
- US-A1- 2021 235 725

## Description

### FIELD OF THE INVENTION

The invention relates to pet chews, more particularly biodegradable and/or edible pet chews that can be digestible by a dog or other pet.

### TECHNICAL BACKGROUND

Pet chews are known and are intended to be chewed or gnawed on by animals, in particular dogs. However, pet chews may also be used by other animals or pets, such as for instance rodents, rabbits or birds.

Pet chews are used for different purposes. For example, pet chews may be chewed by pets for health and oral hygiene purposes, such as to help massaging gums, cleaning teeth, or strengthening teeth or jaws. As the pet's brain may release feel-good chemicals as a result of the chewing or gnawing on a pet chew, chewing may also be soothing, for instance in order to ease pain of inflamed gums experienced during teething, or to ease pain due to the setting of roots of teeth.

Although pet chews may thus have advantages, they may also have disadvantages. For example, when the pet chew is edible and also provides nutrition to the pet, the pet may take in too much nutrition in case the pet chew is sized too large for the respective pet. This may for instance occur when a puppy gets a nutritious pet chew intended for a full grown dog and/or when a dog of a relatively small sized breed gets a nutritious pet chew intended for a full grown dog. On the other hand, it can also be disadvantageous when a relatively large dog gets a pet chew which is too small. Although differently sized pet chews are known, it is often not possible for a pet owner to buy a relatively large pet chew having the same smell, taste and/or consistency as a relatively small pet chew to what the pet is used to, for instance already from the moment that the pet was only a very small puppy or other baby pet. For instance due to that, it often happens that a pet gets a wrong size pet chew.

Further, it is noted that pet chews can, additionally or alternatively, be used and/or be intended as a relief from boredom, to satisfy biting instincts and/or to encourage exercise. Pet chews may be used as a toy or play object, and can for instance be thrown away in order to be retrieved by a dog or other pet. It is noted that dogs may enjoy to play with and/or gnaw on stick-shaped, bone-shaped or other elongate objects, such as bones, tree branches or pet chews of a substantially elongate design. Disadvantages of tree branches, bones and such known pet chew may include that these may lead to broken teeth and that these may splinter, which then for instance may cause punctures or other injuries.

US 2021/235725 A1 discloses an injection moulded pet chew made of a starch based mixture. WO 2021/177905 A1 discloses an animal chew and a method of manufacture the same. The formulation of the animal chew contains no starch or plant-base proteins and thus formation of the desired shapes and forms is achieved without the use of extrusion or injection moulding technologies.

For instance for reasons corresponding to the above, there seems to remain a need for an alternative pet chew. It can for instance therefore be an object of the present invention to provide an alternative pet chew. In particular, it can be an object of the invention to provide a pet chew, wherein at least one of the disadvantages of prior art pet chews is counteracted. More in particular, the invention may aim to provide a pet chew which may counteract at least one of the disadvantages above. In embodiments, the invention aims at providing a pet chew which at one hand can be used relatively safely, and which at the other hand can also facilitate using it with differently sized dogs or other pets.

### BRIEF SUMARY OF THE INVENTION

The invention is set out in the appended claims.

In embodiments, the present invention is directed to a pet chew, said pet chew comprising at least a first pet chew body and a second pet chew body, wherein the first and second pet chew bodies are formed as elongate bodies, preferably substantially stick-shaped bodies, wherein the first and second elongate pet chew bodies extend substantially parallel to each other and are connected to each other at their lateral sides, preferably wherein the pet chew is made substantially of a bioplastic material or composition, more preferably a biodegradable and/or edible bioplastic material or composition, and wherein the pet chew is arranged such that the first pet chew body and the second pet chew body can be torn apart from each other, in particularly in a manner in which the pet chew will plastically deform prior to failure.

By providing the pet chew, in particular an edible pet chew, with multiple parallelly extending elongate pet chew bodies which can be torn apart in multiple elongate pet chew pieces, the originally purchased pet chew, which may be correctly sized for a relatively large pet, may be torn apart by a person into two or even more relatively small pet chews which apart from each other may be given to a dog or other pet. As a result, a pet owner can easily adapt the size of the pet chew to the pet, for instance considering their age, size or activity level. It may for instance thus be counteracted that a pet receives a too large pet chew, for instance including too much nutrition, or that a grown-up pet, which still longs for the same pet chew it had as a small pet in the past, will for instance will be given undersized pet chews.

By arranging the pet chew such that it can be torn apart, in particular by making it relatively tough or leathery, instead of being brittle, it can be facilitated that one pet chew body can be torn apart from an adjacent pet chew body in a manner which allows for a certain extent of plastic deformation to happen before the connection between said two adjacent pet chew bodies fails. As a result, it can be counteracted that relatively sharp edges form upon separating the pet chew bodies from each other. Hence, it can be counteracted that a dog or other pet may injure itself on a piece taken apart from the initial pet chew.

In accordance with the invention, at a temperature of 20 °C, the pet chew is relatively tough or leathery, instead of being brittle, thereby allowing that the first pet chew body and the second pet chew body can be torn apart from each other in a manner which allows for plastic deformation before the connection between the first pet chew body and the second pet chew body fails, thereby counteracting the forming of relatively sharp edges. It is noted that in case the pet chew would have been brittle and would have been arranged to be broken apart, which is the case with some known pet chews which can be broken apart into smaller pieces, thus instead of being torn apart as is the case with the present pet chew, the pieces separated by breaking would seem to fit exactly onto each other afterwards, since no plastic deformation would have occurred. However, when the pet chew is relatively tough, as is the case with this present preferred embodiment, the pet chew will plastically deform at the location where the pieces separate from each other, which will be visible by that the pieces will not neatly fit onto each other after being separated. The plastic deformation may thus counteract the forming of relatively sharp edges when the pet owner adjusts the size of the pet chew to their pet, which can counteract that a dog or other pet may injure itself on a piece taken apart from the initial pet chew.

In embodiments, the pet chew may be primarily composed of a bioplastic material or composition based on so-called destructurized starch or destructured starch. This may for instance help support the pet's digestive system.

By arranging the pet chew such that initially laterally attached pet chew bodies can be torn apart along the longitudinal directions of the elongate pet chew bodies, elongate pet chew pieces can be torn off. Such elongate pet chew pieces, which for instance may be substantially stick-shaped, may be relatively well fitted for letting a dog or pet gnaw on them, for instance because such an elongate pet chew piece may to some extent resemble the elongate shape of a bone and/or tree branch.

In accordance with the invention, the pet chew includes a constriction or so-called narrowing between the first pet chew body and the second pet chew body, wherein said constriction or narrowing forms a weakening, wherein said weakening is arranged for allowing the first pet chew body to be torn apart from the second pet chew body.

In accordance with one aspect of the invention, the pet chew is formed by means of extrusion moulding. Although an extruder may thus be used to form the pet chew, alternative processes may be used to form the pet chew. For example, the pet chew may be produced using a moulding or a so-called shaping process, such as for instance injection moulding or compression moulding.

The invention also relates to a method for producing a pet chew, wherein the method comprises a step of extrusion moulding a profile product. Said profile product forms the pet chew.
Alternatively, the profile product forms a semi-finished product for forming the pet chew. For example, when a so-called continuous profile is being extrusion moulded, the extruded product profile can be cut, or otherwise separated, into pet chews of a certain predetermined length. Additionally, or alternatively, a semi-finished product may be separated into pieces in an other direction, for example by separating pieces along a longitudinal direction of a extruded profile. It will be appreciated that in such embodiments multiple pet chews can be integrally extrusion moulded.

In accordance with an alternative or additional aspect the invention, the pet chew, in particular one formed by means of extrusion moulding, is primarily composed of a material or composition, preferably a bioplastic material or composition, more preferably a bioplastic material or composition based on destructurized potato starch or destructured potato starch, which material or composition, at a pressure of 1 atmosphere, has a freezing point and/or a melting point above 30 °C, preferably above 40 °C, more preferably above 50 °C, yet more preferably above 60 °C.

Further advantageous embodiments according to the invention are described in the appended claims.

### DESCRIPTION OF THE DRAWINGS

The foregoing and other objects and features of the present invention may become more fully apparent from the following description and appended claims, in particular when taken in conjunction with the accompanying drawings. Understanding that these drawings depict only non-limiting exemplary embodiments of the present invention, which are not to be considered limiting the scope of the invention, embodiments of the present invention will now be described with reference to the accompanying drawings in which:
Fig. 1 shows a schematic perspective view of a first embodiment of a pet chew according to an aspect of the invention;
Fig. 2 shows a schematic cross-sectional view of the embodiment of the pet chew of Fig. 1.
Fig. 3 shows a schematic cross-sectional view of two pieces of the pet chew of Figs. 1 and 2 being torn apart; and
Fig. 4 shows a schematic cross-sectional view of a second embodiment of a pet chew according to an aspect of the invention.

### DETAILED DESCRIPTION OF THE INVENTION

It is noted that the figures show merely preferred embodiments according to the invention. In the figures, the same or similar reference signs or numbers refer to equal or corresponding parts.

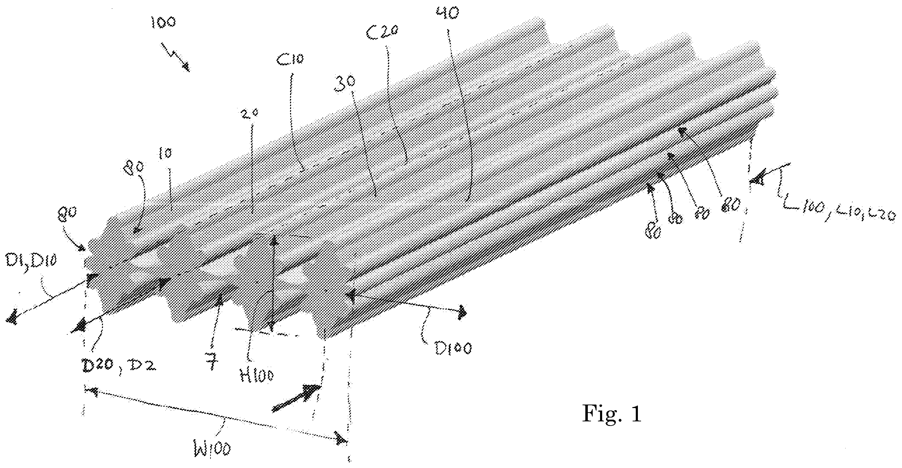

Fig. 1 shows a schematic perspective view of an embodiment of pet chew 100 according to an aspect of the invention.

The pet chew 100 can preferably be made substantially of a bioplastic material or composition, which more preferably may be biodegradable and/or edible, in particular digestible by a respective pet, such as for example a dog. In embodiments, the pet chew may be arranged to provide nutrition to the pet. Advantageously, the bioplastic material or composition can be based on starch or so-called thermoplastic starch (TPS) or polymer starch, in particular so-called destructurized starch or destructured starch, more in particular destructurized potato starch or destructured potato starch.

In preferred embodiments, the pet chew 100 is formed by means of an extrusion moulding process. However, the pet chew 100 can in alternative embodiments be formed by means of any other suitable process, in particular by means of a moulding or a so-called shaping process, such as for instance injection moulding or such as for instance compression moulding.

It is noted that the pet chew 100 comprises at least two pet chew bodies 10, 20, which extend parallel to one other.

Advantageously, as is for instance the case in the here shown extrusion moulded exemplary embodiment of the pet chew 100, a first one 10 of the elongate pet chew bodies may define a first longitudinal direction D10, and said first elongate pet chew body 10 may then have a substantially constant cross-sectional shape and a substantially constant cross-sectional size along said first longitudinal direction D10.

In addition, not only its first pet chew body 10, but the entire pet chew 100 may in embodiments have a substantially constant cross-sectional shape and a substantially constant cross-sectional size along the first longitudinal direction D10.

Although the pet chew 100 of the here shown exemplary embodiment comprises four elongate pet chew bodies 10, 20, 30, 40, the pet chew 100 may comprise another multiple number of pet chew bodies in other embodiment, such as thus for instance two elongate pet chew bodies 10, 20 or such as for instance three, four, five or six elongate pet chew bodies.

Advantageously, the pet chew bodies 10, 20, 30, 40 may be of a substantially stick-shaped design, as can be seen in Fig 1.

Additionally or alternatively, the exterior of the pet chew body may be provided with at least one groove, and preferably a multiple number of grooves 80, which in particular may extend substantially parallel with the longitudinal direction D1 in which one or multiple pet chew bodies extend. It is noted that such grooves 80 may facilitate a relatively good gnawing experience for the pet. Additionally or alternatively, the grooves 80 may provide for relatively good grip. In particularly in embodiments in which the pet chew is formed by means of an extrusion moulding process, which typically may result in relatively smooth outer surfaces, increased grip provided by the grooves 80 may be advantageously, for instance both for the pet and its owner, or another human user of the pet chew 100.

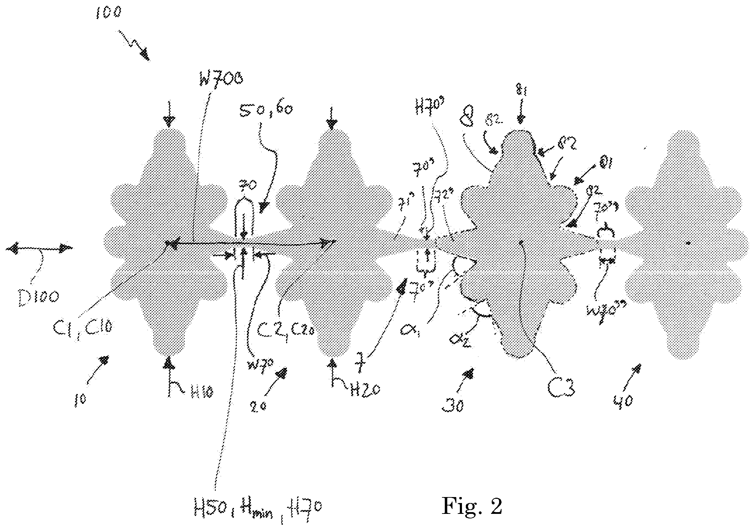

As for instance can be seen in Fig. 2, which shows a cross-sectional view of the pet chew 100 of Fig. 1, the pet chew body 10, 20, 30, 40 may have a cross-section of which the exterior 8 defines multiple protrusions 81 and multiple recesses 82, which recesses may account for the grooves 80. Advantageously, at least some of the exterior angles α₁, α₂ may be smaller than 90°, preferably smaller than 80°, more preferably smaller than 70°. As a result, the grooves 80 may be relatively steep, which may provide for even better grip, in particular to teeth of a dog or other pet.

In embodiments, the cross-section of the pet chew body 10, 20, 30, 40 may be a substantially star-shaped and/or flower-like cross-section, as can be seen relatively well in Fig. 2.

It is noted that each one of the multiple pet chew bodies 10, 20, 30, 40 may preferably have substantially the same cross-sectional size, and more preferably also substantially the same cross-sectional shape, as is the case in the exemplary embodiments shown in the figures. However, in alternative embodiments, different ones of the pet chew bodies of a single pet chew 100 may have substantially different sizes and/or substantially different shapes.

As can be seen in the figures, at least a first one and a second one of the parallelly extending elongate pet chew bodies 10, 20 are connected to each other at their lateral sides, for example by means of a flange and/or a bridging part 7 extending from the first pet chew body 10 towards the second pet chew body 20, as for example can be seen in Fig. 2. A further elongate pet chew body 30, if any, may be connected to the second pet chew body 20, for instance at a second lateral side of said second pet chew body 20, opposite to the first lateral side at which the first pet chew body 10 is connected to said second pet chew body 20.

Preferably, the one or multiple flanges and/or a bridging parts 7 interconnecting adjacent pet chew bodies may preferably extend substantially radially away with respect to the centre C1, C2, C3, C4 of the respective pet chew body 10, 20, 30, 40.

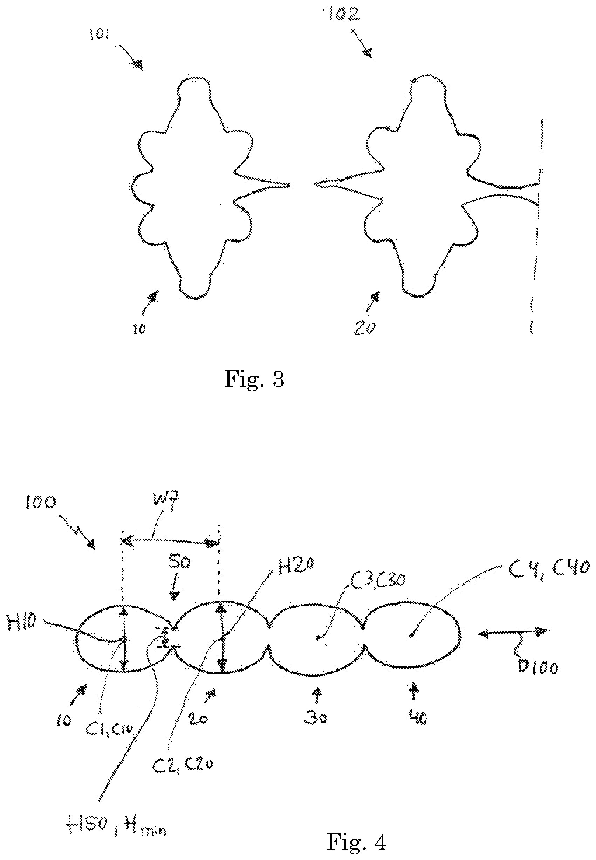

Although bridging parts 7 may advantageously be provided between adjacent pet chew bodies, in alternative embodiments, such as for instance in the one shown in Fig. 4, adjacent pet chew bodies 10, 20, 30, 40 may directly abut each other.

Advantageously, two adjacent ones of the multiple pet chew bodies may thus be connected to each other, preferably at their respective lateral sides. Like the connection between the first and the second pet chew bodies 10, 20, also such other connections may be in a manner allowing that one of said two adjacent pet chew bodies can be ripped off from the other one.

In the here shown exemplary embodiments, the pet chew 100 is of a substantially mat-shaped design, in particular one which is relatively flat. This is, the multiple pet chew bodies extend substantially parallel to each other and each further pet chew body is offset with respect to the previous one in substantially the same direction in which the second pet chew body 20 is offset with respect to the first pet chew body 10. The pet chew 100 may thus form a sheet-shaped or mat-shaped object, which is embossed, as can be seen in Fig. 1. The embossment is due to constrictions 50 or so-called narrowings 50 between adjacent pet chew bodies, which constrictions or narrowings 50 provide for local weakenings enabling that the pet chew bodies may be ripped apart.

In embodiments, the pet chew 100 may be of an elongate design. This is, seen from above or from below, in particular when seen in a direction substantially transverse to the longitudinal directions D1, D2 of the pet chew bodies and substantially transverse to the direction in which the first pet chew body is offset from the second pet chew body, the length L100 of the pet chew 100, measured in the longitudinal directions D1, D2 of the pet chew bodies, may be substantially larger than the width W100 of the pet chew 100. Preferably, the length L100 of the pet chew 100 may be at least 125%, preferably at least 150%, of the width W100 of the pet chew 100.

In addition, or alternatively, the width W100 of the pet chew 100 may be substantially larger than the height H100 of the pet chew 100. For example said with W100 may be at least 150% of said height H100, preferably more than 200% of said height H100.

Advantageously, the pet chew 100 may thus be arranged such that it has a substantially elongate design, even without tearing off any piece thereof.

In addition, or alternatively, the elongate pet chew bodies may be relatively long, for instance having a length L10, L20 being at least three times, preferably at least four times or even at least five time times, bigger than the largest cross-sectional dimension of the pet chew body, which largest cross-sectional dimension may for instance be formed by the height H10, H20 of the pet chew body 10, 20, 30, 40 or the by the width of the pet chew body 10, 20, 30, 40. By arranging the pet chew such that initially laterally attached pet chew bodies 10, 20, 30, 40 which can be ripped off along the longitudinal directions D10, D20 of the elongate pet chew bodies, elongate pet chew pieces 101, 102 can be ripped apart. Such elongate pet chew pieces 101, 102 may for instance be substantially stick-shaped, in particular when they comprise a single pet chew body 10, or may for instance be substantially form a sheet-shaped or mat-shaped object, which may be embossed, in particular when such piece still comprises multiple pet chew bodies.

According to an aspect of the present invention, the pet chew 100 is thus arranged such that one or multiple pet chew bodies can be torn off from one or multiple other pet chew bodies. Thereto, the pet chew 100 includes a respective constriction 50 or so-called narrowing 50 between two adjacent pet chew bodies, which constriction or narrowing forms a weakening, and wherein said weakening may then allow that respective pet chew bodies can be torn off from each other. Advantageous, the constriction 50 or so-called narrowing 50 may have a maximum height H50 which is less than 20%, preferably at most 15%, more preferably at most 10%, yet more preferably at most 5% of the maximum height H10, H20 of the two adjacent pet chew bodies, or even of the maximum height H100 of the entire pet chew 100.

In embodiments, the pet chew 100 can thus include a bridging part 7, wherein said bridging part 7 is connecting a respective pet chew body 10 with an adjacent pet chew body 20. For instance in such embodiments, a first one 20 of the pet chew bodies may then be provided with a first protrusion 71', said first protrusion 71' extending away in a direction towards a second one 30 of the pet chew bodies, wherein said first protrusion 71' is connected to said second one 30 of the pet chew bodies. Preferably, said second one 30 of the pet chew bodies 30 may then be provided with a second protrusion 72' extending away in a direction towards the first one 20 of said pet chew bodies, wherein the first protrusion 71' may then be connected to the second protrusion 72', as for instance can be seen in Fig. 2.

Additionally or alternatively, in a cross-section substantially transverse to the longitudinal directions D10, D20 in which the first and second elongate pet chew bodies 10, 20 extend, the bridging part 60 can taper from the first pet chew body 10 towards the constriction or narrowing 50, which may be included in the bridging part 60 between two adjacent pet chew bodies. Preferably, in said cross-section substantially transverse to the longitudinal directions D 10, D20 in which the first and second elongate pet chew bodies 10, 20 extend, the bridging part 60 may then also taper from the second pet chew body 20 towards said constriction or narrowing 50.

For example, the two tapering parts 71', 72' may directly contact each other, or alternatively an intermediate portion 70' may be provided between said two tapering parts 71', 72'. Preferably, said intermediate portion 70' may define the smallest height H70', Hₘᵢₙ of any location between the two centres C2, C3 of the two respective adjacent pet chew bodies 20, 30.

Advantageous, the cross-section of the pet chew 100 can have a smallest height Hₘᵢₙ, said smallest height Hₘᵢₙ being defined as the lowest height of all locations between the centres of two adjacent pet chew bodies, wherein, along the width direction D100 of the pet chew 100, over at least 65%, preferably at least 75%, more preferably at least 85%, of the width W700 extending between the two adjacent centre lines C10, C20, the cross-section of the pet chew 100 has a height being larger than the smallest height Hₘᵢₙ.

In embodiments, the ratio of the width W70, W70" of the intermediate portion 70, 70', 70" and the width W700 extending between the two adjacent centre lines C10, C20 may be at most 1/4, preferably at most 1/5, more preferably at most 1/6, yet more preferably at most 1/7, such as for instance about 1/8 or about 1/10.

By providing a relatively thin connection between two adjacent elongate pet chew bodies, in particular in combination with a relatively tough or leathery material, it can be facilitated that the pet chew may be ripped apart in a manner substantially lacking burrs and wire edges and the like. The pet chew is arranged such that its respective pet chew bodies can be torn apart from each other, in a manner in which the pet chew will plastically deform prior to failure, which may result in a ductile tear or ductile rip, as is depicted in Fig.3 which shows that one piece 101, substantially consisting of one pet chew body 10, is torn off from the rest 102 of the initial pet chew 100.

As mentioned before, the pet chew 100 may preferably be produced by means of an extruder. The method of producing the pet chew 100 may include a step of extrusion moulding a profile product. In particular, a melted bioplastic material or composition can be forced through a die in order to form the profile product, and the profile product can subsequently be hardened by allowing it to cool.

The material or composition used for the extrusion moulding process may be a bioplastic material or composition, which, at a pressure of 1 atmosphere, may preferably has a melting point and/or a freezing point above 30 °C, preferably above 40 °C, more preferably above 50 °C, yet more preferably above 60 °C. Hence, it can be enabled that the pet chew 100, or ripped-off pieces 101, 102, may be solid to at least a certain extent at normal operating temperatures of the pet chew 100 or piece 101, 102 thereof.

The extrusion moulded profile product may directly form the pet chew 100. However, in preferred embodiments, the extrusion moulding may be a substantially continuous process, and the profile product may then form a semi-finished product for forming the actual pet chew 100. The semi-finished product can be separated, for instance cut, into pet chews 100 of a certain predetermined length.

The die used during the extrusion moulding may be a die of a cross-section corresponding with a single pet chew 100 to be formed. However, in alternative embodiments, the die may be of a cross-section corresponding with the cross-section of multiple pet chews to be formed. For example, multiple initially laterally interconnected pet chews.

It is noted that for the purpose of clarity and a concise description features are described herein as part of the same or separate embodiments, however, it will be appreciated that the scope of the invention may include embodiments having combinations of all or some of the features described.

Further, it is noted that the invention is not restricted to the embodiments described herein. It will be understood that many variants are possible.

For example, although the pet chews according to the exemplary embodiments shown in the figures all have a solid shape, the pet chew may in alternative embodiments have one or more hollow cavities, which may for instance form hollow cores of the pet chew bodies. Such hollow cavities may for instance be formed within the extruded material by means of one or more suspended centre pieces provided at the die.

Such and other variants will be apparent for the person skilled in the art and are considered to lie within the scope of the invention as formulated in the following claims.

## Claims

1. Pet chew (100), comprising at least a first pet chew body (10) and a second pet chew body (20),
wherein the first and second pet chew bodies (10, 20) are formed as elongate bodies, preferably substantially stick-shaped bodies (10, 20),
wherein the first and second elongate pet chew bodies (10, 20) extend substantially parallel to each other and are connected to each other at their lateral sides, wherein the pet chew (100) includes a constriction (50) or so-called narrowing (50) between the first pet chew body (10) and the second pet chew body (20), said constriction (50) or narrowing (50) forming a weakening, said weakening being arranged for allowing the first pet chew body (10) to be torn apart from the second pet chew body (20),
wherein the pet chew (100) is arranged such that the first pet chew body (10) and the second pet chew body (20) can be torn apart from each other,
wherein the pet chew (100), at a temperature of 20 °C, is tough or leathery, instead of being brittle, thereby allowing that the first pet chew body (10) and the second pet chew body (20) can be torn apart from each other in a manner which allows for plastic deformation before the connection between the first pet chew body (10) and the second pet chew body (20) fails, thereby counteracting the forming of relatively sharp edges, and
wherein the pew chew (100) is formed by extrusion moulding, injection moulding, or compression moulding; and/or
wherein the pet chew (100) is substantially of a material or composition which, at a pressure of 1 atmosphere, has a freezing point above 30 °C; and/or
wherein the pet chew (100) is substantially of a material or composition, which, at a pressure of 1 atmosphere, has a melting point above 30 °C.

2. Pet chew (100) according to claim 1,
wherein the pet chew (100) is made substantially of a bioplastic material or composition based on so-called destructurized starch or destructured starch, in particular destructurized potato starch or destructured potato starch.

3. Pet chew (100) according to any one of the preceding claims,
wherein the pet chew (100) is formed by means of extrusion moulding.

4. Pet chew (100) according to any one of the preceding claims,
wherein the pet chew (100) is substantially of a material or composition, preferably a bioplastic material or composition, which, at a pressure of 1 atmosphere, has a freezing point above 30 °C, preferably above 40 °C, more preferably above 50 °C, yet more preferably above 60 °C.

5. Pet chew (100) according to any one of the preceding claims, wherein the pet chew (100) is substantially of a material or composition, preferably a bioplastic material or composition, which, at a pressure of 1 atmosphere, has a melting point above 30 °C, preferably above 40 °C, more preferably above 50 °C, yet more preferably above 60 °C.

6. Pet chew (100) according to any one of the preceding claims,
wherein the first elongate pet chew body (10) defines a first longitudinal direction (D10), and wherein the first elongate pet chew body (10) has a substantially constant cross-sectional shape and a substantially constant cross-sectional size along said first longitudinal direction (D10),
preferably wherein the pet chew (100) has a substantially constant cross-sectional shape and a substantially constant cross-sectional size along the first longitudinal direction (D10).

7. Pet chew (100) according to any one of the preceding claims,
wherein the second elongate pet chew body (20) defines a second longitudinal direction (D20), and wherein the second elongate pet chew body (20) has a substantially constant cross-sectional shape and a substantially constant cross-sectional size along said second longitudinal direction (D20); and/or
wherein the pet chew (100) includes a constriction (50) or so-called narrowing (50) between the first pet chew body (10) and the second pet chew body (20), said constriction (50) or narrowing (50) forming a weakening, said weakening being arranged for allowing the first pet chew body (10) to be torn apart from the second pet chew body (20).

8. Pet chew according to any one of the preceding claims, wherein the pet chew (100) includes a bridging part (60), said bridging part (60) connecting the first pet chew body (10) with the second pet chew body (20),
preferably wherein the bridging part (60) forms or includes a constriction (50) or so-called narrowing (50) between the first pet chew body (10) and the second pet chew body (20), said constriction (50) or narrowing (50) forming a weakening arranged for allowing the first pet chew body (10) to be torn apart from the second pet chew body (20),
more preferably wherein, in a cross-section substantially transverse to the longitudinal directions (D10, D20) in which the first and second elongate pet chew bodies (10, 20) extend, the bridging part (60) tapers at least from the first pet chew body (10), and preferably also from the second pet chew body (20), towards said constriction (50) or narrowing (50).

9. Pet chew (100) according to any one of the preceding claims, preferably according to any one of claims 6-8,
wherein the pet chew (100) defines a width direction (D100) which extends in the direction in which a centre line (C10) of the first elongate pet chew body (109) is offset from a centre line (C20) of the second elongate pet chew body (20),
wherein the first pet chew body (10) has a first height (H10) which is to be measured in a direction substantially transverse to the width direction (D100) of the pet chew (100) and substantially transverse to the first longitudinal direction (D10) in which the centre line (C10) of the first pet chew body (10) extends,
wherein the second pet chew body (20) has a second height (H20) which is to be measured in a direction substantially transverse to the width direction (D100) of the pet chew (100) and substantially transverse to the second longitudinal direction (D20) in which the centre line (C20) of the second pet chew body (20) extends,
preferably wherein the second height (H20) of the second pet chew body (20) is substantially equal to the first height (H10) of the first pet chew body (10),
wherein, along the width of the pet chew (100), at a location between the centre (C1) of the first pet chew body (10) and the centre (C2) of the second pet chew body (20), the pet chew (100) defines an intermediate height,
wherein said intermediate height is smaller than the first height (H10) and smaller than the second height (H20),
preferably wherein, at the location defining the intermediate height, the pet chew (100) has the lowest height of all locations between the centre (C1) of the first pet chew body (10) and the centre (C2) of the second pet chew body (20).

10. Pet chew (100) according to any one of the preceding claims, preferably according to anyone of claims 6-9,
wherein the cross-section of the pet chew (100) has a smallest height (Hₘᵢₙ), said smallest height (Hₘᵢₙ) being defined as the lowest height of all locations between the centre (C1) of the first pet chew body (10) and the centre (C2) of the second pet chew body (20),
wherein the pet chew (100) defines a width direction (D100) which extends in the direction in which a centre line (C10) of the first elongate pet chew body (10) is offset from a centre line (C20) of the second elongate pet chew body (20),
wherein, along said width direction (D100) of the pet chew (100), over at least 65% of the width (W700) extending between the centre line (C10) of the first elongate pet chew body (10) and the centre line (C20) of the second elongate pet chew body (20), the cross-section of the pet chew (100) has a height being larger than the smallest height (Hₘᵢₙ),
preferably wherein along the width (W700) extending between the centre line (C10) of the first elongate pet chew body (10) and the centre line (C20) of the second elongate pet chew body (20), only a single relatively small portion (70, 70', 70") of the cross-section of the pet chew (100) has a height corresponding with the smallest height (Hₘᵢₙ),
more preferably wherein the ratio of the width (W70', W70") of said relatively small portion (70, 70', 70") and the width (W700) extending between the centre line (C10) of the first elongate pet chew body (10) and the centre line (C20) of the second elongate pet chew body (20) is at most 1/4, preferably at most 1/5, more preferably at most 1/6, yet more preferably at most 1/7, such as for instance about 1/8 or about 1/10.

11. Pet chew (100) according to any one of the preceding claims, wherein the pet chew (100) is made substantially of a bioplastic material or composition, more preferably a biodegradable and/or edible bioplastic material or composition, yet more preferably a bioplastic material or composition based on starch or so-called thermoplastic starch (TPS) or polymer starch.

12. Pet chew (100) according to any one of the preceding claims,
wherein the pet chew (100) comprises more than two elongate pet chew bodies (10, 20, 30, 40), such as for instance three, four, five or six pet chew bodies (10, 20, 30, 40),
preferably wherein the pet chew bodies (10, 20, 30, 40) extend substantially parallel to each other,
more preferably wherein two adjacent ones (10, 20; 20, 30; 30, 40) of the multiple pet chew bodies (10, 20, 30, 40) are connected to each other at their respective lateral sides in a manner allowing that said two adjacent pet chew bodies (10, 20; 20, 30; 30, 40) can be torn apart from each other.

13. Pet chew (100) according to any one of the preceding claims, wherein at least the first pet chew body (10), and preferably each one of the pet chew bodies (10, 20, 30, 40) of the pet chew (100), has a substantially star-shaped or flower-like cross-section.

14. Method for producing a pet chew (100) according to any one of the preceding claims,
wherein the method comprises a step of extrusion moulding a profile product, said profile product forming the pet chew (100) or a semi-finished product for forming the pet chew (100),
preferably using a die of a cross-section corresponding with one or multiple pet chews (100) to be formed, said pet chew (100) to be formed comprising at least a first elongate pet chew body (10) and a second elongate pet chew body (20), said first and second pet chew bodies (10, 20) extending substantially parallel to each other and being connected to each other at their lateral sides.

15. Method according to claim 14,
wherein the extruded product profile is separated, for instance cut, into pet chews (100) of a certain predetermined length; and/or
wherein a melted bioplastic material or composition is forced through a die in order to form the profile product, wherein the profile product is subsequently hardened by allowing it to cool,
preferably wherein the bioplastic material or composition is a biodegradable and/or edible bioplastic material or composition, more preferably a bioplastic material or composition based on starch or so-called thermoplastic starch (TPS) or polymer starch, in particular a bioplastic material or composition based on so-called destructurized starch or destructured starch.

## Patentansprüche

1. Kausnack (100) für Haustiere, umfassend wenigstens einen ersten Körper (10) des Kausnacks für Haustiere und einen zweiten Körper (20) des Kausnacks für Haustiere,
wobei der erste und zweite Körper (10, 20) des Kausnacks für Haustiere als längliche Körper, vorzugsweise im Wesentlichen als stabförmige Körper (10, 20), gebildet sind,
wobei sich der erste und zweite längliche Körper (10, 20) des Kausnacks für Haustiere im Wesentlichen parallel zueinander erstrecken und an ihren lateralen Seiten miteinander verbunden sind, wobei der Kausnack (100) für Haustiere eine Verengung (50) oder sogenannte Verjüngung (50) zwischen dem ersten Körper (10) des Kausnacks für Haustiere und dem zweiten Körper (20) des Kausnacks für Haustiere einschließt, wobei die Verengung (50) oder Verjüngung (50) eine Schwächung ausbildet, wobei die Schwächung angeordnet, um dem ersten Körper (10) des Kausnacks für Haustiere zu erlauben vom zweiten Körper (20) des Kausnacks für Haustiere abgerissen zu werden,
wobei der Kausnack (100) für Haustiere so angeordnet ist, dass der erste Körper (10) des Kausnacks für Haustiere und der zweite Körper (20) des Kausnacks für Haustiere auseinandergerissen werden können,
wobei der Kausnack (100) für Haustiere bei einer Temperatur von 20 °C zäh oder ledern, anstatt spröde ist, dadurch erlaubend, dass der erste Körper (10) des Kausnacks für Haustiere und der zweite Körper (20) des Kausnacks für Haustiere in einer Weise auseinandergerissen werden können, die eine plastische Verformung erlaubt, bevor die Verbindung zwischen dem ersten Körper (10) des Kausnacks für Haustiere und dem zweiten Körper (20) des Kausnacks für Haustiere verlorengeht, dadurch der Bildung relativ scharfer Kanten entgegenwirkend, und
wobei der Kausnack (100) für Haustiere durch Strangpressen, Spritzgießen oder Formpressen gebildet wird; und/oder
wobei der Kausnack (100) für Haustiere im Wesentlichen aus einem Material oder einer Zusammensetzung ist, das/die bei einem Druck von 1 Atmosphäre einen Gefrierpunkt von über 30 °C hat; und/oder
wobei der Kausnack (100) für Haustiere im Wesentlichen aus einem Material oder einer Zusammensetzung ist, das/die bei einem Druck von 1 Atmosphäre einen Schmelzpunkt von über 30 °C hat.

2. Kausnack (100) für Haustiere nach Anspruch 1,
wobei der Kausnack (100) für Haustiere im Wesentlichen aus einem bioplastischen Material oder einer Zusammensetzung basierend auf der Grundlage von sogenannter destrukturisierter oder destrukturierter Stärke, insbesondere destrukturisierter oder destrukturierter Kartoffelstärke, gemacht ist.

3. Kausnack (100) für Haustiere nach einem der vorhergehenden Ansprüche,
wobei der Kausnack (100) für Haustiere mittels Strangpressen gebildet wird.

4. Kausnack (100) für Haustiere nach einem der vorhergehenden Ansprüche,
wobei der Kausnack (100) für Haustiere im Wesentlichen aus einem Material oder einer Zusammensetzung, vorzugsweise eine/m/r bioplastischen Material oder Zusammensetzung, besteht, das/die bei einem Druck von 1 Atmosphäre einen Gefrierpunkt über 30 °C, vorzugsweise über 40 °C, stärker bevorzugt über 50 °C, noch stärker bevorzugt über 60 °C hat.

5. Kausnack (100) für Haustiere nach einem der vorhergehenden Ansprüche, wobei der Kausnack (100) für Haustiere im Wesentlichen aus einem Material oder einer Zusammensetzung, vorzugsweise eine/m/r bioplastischen Material oder Zusammensetzung, besteht, das/die bei einem Druck von 1 Atmosphäre einen Schmelzpunkt über 30 °C, vorzugsweise über 40 °C, stärker bevorzugt über 50 °C, noch stärker bevorzugt über 60 °C hat.

6. Kausnack (100) für Haustiere nach einem der vorhergehenden Ansprüche,
wobei der erste längliche Körper (10) des Kausnacks für Haustiere eine erste Längsrichtung (D10) definiert, und wobei der erste längliche Körper (10) des Kausnacks für Haustiere eine im Wesentlichen konstante Querschnittsform und eine im Wesentlichen konstante Querschnittsgröße entlang der ersten Längsrichtung (D10) hat,
wobei der Kausnack (100) für Haustiere vorzugsweise eine im Wesentlichen konstante Querschnittsform und eine im Wesentlichen konstante Querschnittsgröße entlang der ersten Längsrichtung (D10) hat.

7. Kausnack (100) für Haustiere nach einem der vorhergehenden Ansprüche,
wobei der zweite längliche Körper (20) des Kausnacks für Haustiere eine zweite Längsrichtung (D20) definiert, und wobei der zweite längliche Körper (20) des Kausnacks für Haustiere eine im Wesentlichen konstante Querschnittsform und eine im Wesentlichen konstante Querschnittsgröße entlang der zweiten Längsrichtung (D20) hat; und/oder
wobei der Kausnack (100) für Haustiere eine Verengung (50) oder sogenannte Verjüngung (50) zwischen dem ersten Körper (10) des Kausnacks für Haustiere und dem zweiten Körper (20) des Kausnacks für Haustiere einschließt, wobei die Verengung (50) oder Verjüngung (50) eine Schwächung bildet, wobei die Schwächung angeordnet, um dem ersten Körper (10) des Kausnacks für Haustiere zu erlaube vom zweiten Körper (20) des Kausnacks für Haustiere abgerissen zu werden.

8. Kausnack für Haustiere nach einem der vorhergehenden Ansprüche, wobei der Kausnack (100) für Haustiere ein Brückenteil (60) einschließt, wobei das Brückenteil (60) den ersten Körper (10) des Kausnacks für Haustiere mit dem zweiten Körper (20) des Kausnacks für Haustiere verbindet,
wobei das Brückenteil (60) vorzugsweise eine Verengung (50) oder sogenannte Verjüngung (50) zwischen dem ersten Körper (10) des Kausnacks für Haustiere und dem zweiten Körper (20) des Kausnacks für Haustiere bildet oder einschließt, wobei die Verengung (50) oder Verjüngung (50) eine Schwächung bildet, angeordnet, um dem ersten Körper (10) des Kausnacks für Haustiere zu erlauben vom zweiten Körper (20) des Kausnacks für Haustiere abgerissen zu werden,
wobei sich das Brückenteil (60) stärker bevorzugt in einem Querschnitt im Wesentlichen quer zu den Längsrichtungen (D10, D20), in denen sich der erste und zweite längliche Körper (10, 20) des Kausnacks für Haustiere erstrecken, zumindest vom ersten Körper (10) des Kausnacks für Haustiere und vorzugsweise auch vom zweiten Körper (20) des Kausnacks für Haustiere in Richtung der Verengung (50) oder Verjüngung (50) verjüngt.

9. Kausnack (100) für Haustiere nach einem der vorhergehenden Ansprüche, vorzugsweise nach einem der Ansprüche 6 bis 8,
wobei der Kausnack (100) für Haustiere eine Breitenrichtung (D100) definiert, die sich in der Richtung erstreckt, in der eine Mittellinie (C10) des ersten länglichen Körpers (109) des Kausnacks für Haustiere von einer Mittellinie (C20) des zweiten länglichen Körpers (20) des Kausnacks für Haustiere versetzt ist,
wobei der erste Körper (10) des Kausnacks für Haustiere eine erste Höhe (H10) hat, die in einer Richtung im Wesentlichen quer zur Breitenrichtung (D100) des Kausnacks (100) für Haustiere und im Wesentlichen quer zur ersten Längsrichtung (D10), in der sich die Mittellinie (C10) des ersten Körpers (10) des Kausnacks für Haustiere erstreckt, zu messen ist,
wobei der zweite Körper (20) des Kausnacks für Haustiere eine zweite Höhe (H20) hat, die in einer Richtung im Wesentlichen quer zur Breitenrichtung (D100) des Kausnacks (100) für Haustiere und im Wesentlichen quer zur zweiten Längsrichtung (D20), in der sich die Mittellinie (C20) des zweiten Körpers (20) des Kausnacks für Haustiere erstreckt, zu messen ist,
wobei die zweite Höhe (H20) des zweiten Körpers (20) des Kausnacks für Haustiere vorzugsweise im Wesentlichen gleich der ersten Höhe (H10) des ersten Körpers (10) des Kausnacks für Haustiere ist,
wobei entlang der Breite des Kausnacks (100) für Haustiere an einer Stelle zwischen der Mitte (C1) des ersten Körpers (10) des Kausnacks für Haustiere und der Mitte (C2) des zweiten Körpers (20) des Kausnacks für Haustiere, der Kausnack (100) für Haustiere eine Zwischenhöhe definiert,
wobei die Zwischenhöhe kleiner als die erste Höhe (H10) und kleiner als die zweite Höhe (H20) ist,
wobei an der die Zwischenhöhe definierenden Stelle der Kausnack (100) für Haustiere vorzugsweise die geringste Höhe aller Stellen zwischen der Mitte (C1) des ersten Körpers (10) des Kausnacks für Haustiere und der Mitte (C2) des zweiten Körpers (20) des Kausnacks für Haustiere aufweist.

10. Kausnack (100) für Haustiere nach einem der vorhergehenden Ansprüche, vorzugsweise nach einem der Ansprüche 6 bis 9,
wobei der Kausnack (100) für Haustiere eine geringste Höhe (Hₘᵢₙ) hat, wobei die geringste Höhe (Hₘᵢₙ) als die geringste Höhe aller Stellen zwischen der Mitte (C1) des ersten Körpers (10) des Kausnacks für Haustiere und der Mitte (C2) des zweiten Körpers (20) des Kausnacks für Haustiere definiert ist,
wobei der Kausnack (100) für Haustiere eine Breitenrichtung (D100) definiert, die sich in der Richtung erstreckt, in der eine Mittellinie (C10) des ersten länglichen Körpers (10) des Kausnacks für Haustiere von einer Mittellinie (C20) des zweiten länglichen Körpers (20) des Kausnacks für Haustiere versetzt ist,
wobei entlang der Breitenrichtung (D100) des Kausnacks (100) für Haustiere über mindestens 65 % der Breite (W700), sich erstreckend zwischen der Mittellinie (C10) des ersten länglichen Körpers (10) des Kausnacks für Haustiere und der Mittellinie (C20) des zweiten länglichen Körpers (20) des Kausnacks für Haustiere, der Querschnitt des Kausnacks (100) für Haustiere eine Höhe hat, die größer ist als die kleinste Höhe (Hₘᵢₙ),
wobei entlang der Breite (W700), sich erstreckend zwischen der Mittellinie (C10) des ersten länglichen Körpers (10) des Kausnacks für Haustiere und der Mittellinie (C20) des zweiten länglichen Körpers (20) des Kausnacks für Haustiere, vorzugsweise nur ein einzelner, relativ kleiner Abschnitt (70, 70', 70") des Querschnitts des Kausnacks (100) für Haustiere eine der kleinsten Höhe (Hₘᵢₙ) entsprechende Höhe hat,
wobei, stärker bevorzugt, das Verhältnis zwischen der Breite (W70', W70") des relativ kleinen Abschnitts (70, 70', 70") und der Breite (W700), sich erstreckend zwischen der Mittellinie (C10) des ersten länglichen Körpers (10) des Kausnacks für Haustiere und der Mittellinie (C20) des zweiten länglichen Körpers (20) des Kausnacks für Haustiere, höchstens 1/4, vorzugsweise höchstens 1/5, stärker bevorzugt höchstens 1/6, noch stärker bevorzugt höchstens 1/7 ist, wie beispielsweise etwa 1/8 oder etwa 1/10.

11. Kausnack (100) für Haustiere nach einem der vorhergehenden Ansprüche, wobei der Kausnack (100) für Haustiere im Wesentlichen aus eine/m/r bioplastischen Material oder Zusammensetzung, vorzugsweise eine/m/r biologisch abbaubaren und/oder essbaren bioplastischen Material oder Zusammensetzung, noch stärker bevorzugt eine/m/r bioplastischen Material oder Zusammensetzung basierend auf Stärke oder sogenannter thermoplastischer Stärke (TPS) oder Polymerstärke, gemacht ist.

12. Kausnack (100) für Haustiere nach einem der vorhergehenden Ansprüche,
wobei der Kausnack (100) für Haustiere mehr als zwei längliche Körper (10, 20, 30, 40) des Kausnacks für Haustiere umfasst, wie beispielsweise drei, vier, fünf oder sechs Körper (10, 20, 30, 40) des Kausnacks für Haustiere,
wobei sich die Körper (10, 20, 30, 40) des Kausnacks für Haustiere vorzugsweise im Wesentlichen parallel zueinander erstrecken,
wobei zwei benachbarte einzelne (10, 20; 20, 30; 30, 40) der mehreren Körper (10, 20, 30, 40) des Kausnacks für Haustiere stärker bevorzugt an ihren jeweiligen Seiten in einer Weise miteinander verbunden sind, die erlaubt, dass die beiden benachbarten Körper (10, 20; 20, 30; 30, 40) des Kausnacks für Haustiere auseinandergerissen werden können.

13. Kausnack (100) für Haustiere nach einem der vorhergehenden Ansprüche, wobei wenigstens der erste Körper (10) des Kausnacks für Haustiere und vorzugsweise jeder einzelne der Körper (10, 20, 30, 40) des Kausnacks (100) für Haustiere einen im Wesentlichen sternförmigen oder blütenähnlichen Querschnitt hat.

14. Verfahren zur Herstellung eines Kausnacks (100) für Haustiere nach einem der vorhergehenden Ansprüche,
wobei das Verfahren einen Schritt des Strangpressens eines Profilprodukts umfasst, wobei das Profilprodukt den Kausnack (100) für Haustiere oder ein Halbfertigerzeugnis zum Formen des Kausnacks (100) für Haustiere bildet,
vorzugsweise unter Verwendung einer Form mit einem Querschnitt entsprechend einem oder mehreren zu bildenden Kausnacks (100) für Haustiere, wobei der zu bildende Kausnack (100) für Haustiere wenigstens einen ersten länglichen Körper (10) des Kausnacks für Haustiere und einen zweiten länglichen Körper (20) des Kausnacks für Haustiere umfasst, wobei sich der erste und zweite Körper (10, 20) des Kausnacks für Haustiere im Wesentlichen parallel zueinander erstrecken und an ihren Seiten miteinander verbunden sind.

15. Verfahren nach Anspruch 14,
wobei das extrudierte Produktprofil in Kausnacks (100) für Haustiere in einer bestimmten vorbestimmten Länge getrennt, beispielsweise geschnitten, wird; und/oder
wobei ein geschmolzenes bioplastisches Material oder eine Zusammensetzung durch eine Form gepresst wird, um das Profilprodukt zu bilden, wobei das Profilprodukt anschließend gehärtet wird, dass es abkühlen kann,
wobei das bioplastische Material oder die Zusammensetzung vorzugsweise ein/e biologisch abbaubare/s und/oder essbare/s bioplastische/s Material oder Zusammensetzung ist, stärker bevorzugt ein/e bioplastische/s Material oder Zusammensetzung basierend auf Stärke oder sogenannter thermoplastischer Stärke (TPS) oder Polymerstärke, insbesondere ein/e bioplastische/s Material oder Zusammensetzung basierend auf sogenannter destrukturisierter oder destrukturierter Stärke.

## Revendications

1. Article à mâcher pour animal de compagnie (100), comprenant au moins un premier corps d'article à mâcher pour animal de compagnie (10) et un deuxième corps d'article à mâcher pour animal de compagnie (20),
dans lequel les premier et deuxième corps d'article à mâcher pour animal de compagnie (10, 20) sont sous la forme de corps allongés, de préférence de corps pratiquement en forme de bâtonnet (10, 20),
dans lequel les premier et deuxième corps d'article à mâcher pour animal de compagnie allongés (10, 20) s'étendent pratiquement parallèlement l'un à l'autre et sont connectés l'un à l'autre au niveau de leurs côtés latéraux, lequel article à mâcher pour animal de compagnie (100) inclut un étranglement (50) ou ce que l'on appelle un rétrécissement (50) entre le premier corps d'article à mâcher pour animal de compagnie (10) et le deuxième corps d'article à mâcher pour animal de compagnie (20), ledit étranglement (50) ou rétrécissement (50) formant une fragilisation, ladite fragilisation étant disposée de façon à permettre au premier corps d'article à mâcher pour animal de compagnie (10) d'être déchiré du deuxième corps d'article à mâcher pour animal de compagnie (20),
lequel article à mâcher pour animal de compagnie (100) est agencé de façon que le premier corps d'article à mâcher pour animal de compagnie (10) et le deuxième corps d'article à mâcher pour animal de compagnie (20) puissent être déchirés l'un de l'autre,
lequel article à mâcher pour animal de compagnie (100), à une température de 20°C, est robuste ou coriace, au lieu d'être fragile, ce qui permet ainsi que le premier corps d'article à mâcher pour animal de compagnie (10) et le deuxième corps d'article à mâcher pour animal de compagnie (20) puissent être déchirés l'un de l'autre d'une manière qui permet une déformation plastique avant que la connexion entre le premier corps d'article à mâcher pour animal de compagnie (10) et le deuxième corps d'article à mâcher pour animal de compagnie (20) cède, en empêchant ainsi la formation de bords relativement tranchants, et
lequel article à mâcher pour animal de compagnie (100) est formé par moulage par extrusion, moulage par injection, ou moulage par compression ; et/ou
lequel article à mâcher pour animal de compagnie (100) est pratiquement en un matériau ou composition qui, sous une pression de 1 atmosphère, a un point de congélation supérieur à 30°C ; et/ou
lequel article à mâcher pour animal de compagnie (100) est pratiquement en un matériau ou composition qui, sous une pression de 1 atmosphère, a un point de fusion supérieur à 30°C.

2. Article à mâcher pour animal de compagnie (100) selon la revendication 1, lequel article à mâcher pour animal de compagnie (100) est fait pratiquement en un matériau ou composition bioplastique à base de ce que l'on appelle l'amidon rendu non structuré ou l'amidon déstructuré, en particulier l'amidon de pomme de terre rendu non structuré ou l'amidon de pomme de terre déstructuré.

3. Article à mâcher pour animal de compagnie (100) selon l'une quelconque des revendications précédentes, lequel article à mâcher pour animal de compagnie (100) est formé au moyen d'un moulage par extrusion.

4. Article à mâcher pour animal de compagnie (100) selon l'une quelconque des revendications précédentes, lequel article à mâcher pour animal de compagnie (100) est pratiquement en un matériau ou composition, de préférence un matériau ou composition bioplastique, qui, sous une pression de 1 atmosphère, a un point de congélation supérieur à 30°C, de préférence supérieur à 40°C, mieux encore supérieur à 50°C, plus particulièrement supérieur à 60°C.

5. Article à mâcher pour animal de compagnie (100) selon l'une quelconque des revendications précédentes, lequel article à mâcher pour animal de compagnie (100) est pratiquement en un matériau ou composition, de préférence un matériau ou composition bioplastique, qui, sous une pression de 1 atmosphère, a un point de fusion supérieur à 30°C, de préférence supérieur à 40°C, mieux encore supérieur à 50°C, plus particulièrement supérieur à 60°C.

6. Article à mâcher pour animal de compagnie (100) selon l'une quelconque des revendications précédentes,
dans lequel le premier corps d'article à mâcher pour animal de compagnie allongé (10) définit une première direction longitudinale (D10), et dans lequel le premier corps d'article à mâcher pour animal de compagnie allongé (10) a une forme en coupe transversale pratiquement constante et une taille en coupe transversale pratiquement constante le long de ladite première direction longitudinale (D10),
de préférence lequel article à mâcher pour animal de compagnie (100) a une forme en coupe transversale pratiquement constante et une taille en coupe transversale pratiquement constante le long de ladite première direction longitudinale (D10).

7. Article à mâcher pour animal de compagnie (100) selon l'une quelconque des revendications précédentes,
dans lequel le deuxième corps d'article à mâcher pour animal de compagnie allongé (20) définit une deuxième direction longitudinale (D20), et dans lequel le deuxième corps d'article à mâcher pour animal de compagnie allongé (20) a une forme en coupe transversale pratiquement constante et une taille en coupe transversale pratiquement constante le long de ladite deuxième direction longitudinale (D20) ; et/ou
lequel article à mâcher pour animal de compagnie (100) inclut un étranglement (50) ou ce que l'on appelle un rétrécissement (50) entre le premier corps d'article à mâcher pour animal de compagnie (10) et le deuxième corps d'article à mâcher pour animal de compagnie (20), ledit étranglement (50) ou rétrécissement (50) formant une fragilisation, ladite fragilisation étant disposée de façon à permettre au premier corps d'article à mâcher pour animal de compagnie (10) d'être déchiré du deuxième corps d'article à mâcher pour animal de compagnie (20).

8. Article à mâcher pour animal de compagnie selon l'une quelconque des revendications précédentes, lequel article à mâcher pour animal de compagnie (100) inclut une partie de pont (60), ladite partie de pont (60) connectant le premier corps d'article à mâcher pour animal de compagnie (10) au deuxième corps d'article à mâcher pour animal de compagnie (20),
de préférence dans lequel la partie de pont (60) forme ou inclut un étranglement (50) ou ce que l'on appelle un rétrécissement (50) entre le premier corps d'article à mâcher pour animal de compagnie (10) et le deuxième corps d'article à mâcher pour animal de compagnie (20), ledit étranglement (50) ou rétrécissement (50) formant une fragilisation disposée de façon à permettre au premier corps d'article à mâcher pour animal de compagnie (10) d'être déchiré du deuxième corps d'article à mâcher pour animal de compagnie (20),
mieux encore dans lequel, dans une coupe transversale pratiquement transversale aux directions longitudinales (D10, D20) dans lesquelles s'étendent les premier et deuxième corps d'article à mâcher pour animal de compagnie allongés (10, 20), la partie de pont (60) s'effile au moins à partir du premier corps d'article à mâcher pour animal de compagnie (10), et de préférence aussi à partir du deuxième corps d'article à mâcher pour animal de compagnie (20), en direction dudit étranglement (50) ou rétrécissement (50).

9. Article à mâcher pour animal de compagnie (100) selon l'une quelconque des revendications précédentes, de préférence selon l'une quelconque des revendications 6 à 8,
lequel article à mâcher pour animal de compagnie (100) définit une direction de la largeur (D100) qui s'étend dans la direction dans laquelle une ligne centrale (C10) du premier corps d'article à mâcher pour animal de compagnie allongé (109) est décalée par rapport à une ligne centrale (C20) du deuxième corps d'article à mâcher pour animal de compagnie allongé (20),
dans lequel le premier corps d'article à mâcher pour animal de compagnie (10) a une première hauteur (H10) qui doit être mesurée dans une direction pratiquement transversale à la direction de la largeur (D100) de l'article à mâcher pour animal de compagnie (100) et pratiquement transversale à la première direction longitudinale (D10) dans laquelle s'étend la ligne centrale (C10) du premier corps d'article à mâcher pour animal de compagnie (10),
dans lequel le deuxième corps d'article à mâcher pour animal de compagnie (20) a une deuxième hauteur (H20) qui doit être mesurée dans une direction pratiquement transversale à la direction de la largeur (D100) de l'article à mâcher pour animal de compagnie (100) et pratiquement transversale à la deuxième direction longitudinale (D20) dans laquelle s'étend la ligne centrale (C20) du deuxième corps d'article à mâcher pour animal de compagnie (20),
de préférence dans lequel la deuxième hauteur (H20) du deuxième corps d'article à mâcher pour animal de compagnie (20) est pratiquement égale à la première hauteur (H10) du premier corps d'article à mâcher pour animal de compagnie (10),
dans lequel, le long de la largeur de l'article à mâcher pour animal de compagnie (100), en un emplacement entre le centre (C1) du premier corps d'article à mâcher pour animal de compagnie (10) et le centre (C2) du deuxième corps d'article à mâcher pour animal de compagnie (20), l'article à mâcher pour animal de compagnie (100) définit une hauteur intermédiaire,
dans lequel ladite hauteur intermédiaire est inférieure à la première hauteur (H10) et inférieure à la deuxième hauteur (H20),
de préférence dans lequel, au niveau de l'emplacement définissant la hauteur intermédiaire, l'article à mâcher pour animal de compagnie (100) a la hauteur la plus petite de tous les emplacements entre le centre (C1) du premier corps d'article à mâcher pour animal de compagnie (10) et le centre (C2) du deuxième corps d'article à mâcher pour animal de compagnie (20).

10. Article à mâcher pour animal de compagnie (100) selon l'une quelconque des revendications précédentes, de préférence selon l'une quelconque des revendications 6 à 9,
dans lequel la coupe transversale de l'article à mâcher pour animal de compagnie (100) a une hauteur minimale (Hₘᵢₙ), ladite hauteur minimale (Hₘᵢₙ) étant définie par la hauteur la plus petite de tous les emplacements entre le centre (C1) du premier corps d'article à mâcher pour animal de compagnie (10) et le centre (C2) du deuxième corps d'article à mâcher pour animal de compagnie (20),
lequel article à mâcher pour animal de compagnie (100) définit une direction de la largeur (D100) qui s'étend dans la direction dans laquelle une ligne centrale (C10) du premier corps d'article à mâcher pour animal de compagnie allongé (10) est décalée par rapport à une ligne centrale (C20) du deuxième corps d'article à mâcher pour animal de compagnie allongé (20),
dans lequel, le long de ladite direction de la largeur (D100) de l'article à mâcher pour animal de compagnie (100), sur au moins 65 % de la largeur (W700) s'étendant entre la ligne centrale (C10) du premier corps d'article à mâcher pour animal de compagnie allongé (10) et la ligne centrale (C20) du deuxième corps d'article à mâcher pour animal de compagnie allongé (20), la coupe transversale de l'article à mâcher pour animal de compagnie (100) a une hauteur qui est supérieure à la hauteur minimale (Hₘᵢₙ),
de préférence dans lequel, le long de la largeur (W700) s'étendant entre la ligne centrale (C10) du premier corps d'article à mâcher pour animal de compagnie allongé (10) et la ligne centrale (C20) du deuxième corps d'article à mâcher pour animal de compagnie allongé (20), seulement une seule portion relativement petite (70, 70', 70") de la coupe transversale de l'article à mâcher pour animal de compagnie (100) a une hauteur correspondant à la hauteur minimale (Hₘᵢₙ),
mieux encore dans lequel le rapport de la largeur (W70', W70") de ladite portion relativement petite (70, 70', 70") à la largeur (W700) s'étendant entre la ligne centrale (C10) du premier corps d'article à mâcher pour animal de compagnie allongé (10) et la ligne centrale (C20) du deuxième corps d'article à mâcher pour animal de compagnie allongé (20) est d'au plus 1/4, de préférence d'au plus 1/5, mieux encore d'au plus 1/6, plus particulièrement d'au plus 1/7, tel que par exemple d'environ 1/8 ou d'environ 1/10.

11. Article à mâcher pour animal de compagnie (100) selon l'une quelconque des revendications précédentes, lequel article à mâcher pour animal de compagnie (100) est fait pratiquement d'un matériau ou composition bioplastique, mieux encore d'un matériau ou composition bioplastique biodégradable et/ou comestible, plus particulièrement d'un matériau ou composition bioplastique à base d'amidon ou de ce que l'on appelle l'amidon thermoplastique (TPS) ou l'amidon polymère.

12. Article à mâcher pour animal de compagnie (100) selon l'une quelconque des revendications précédentes,
lequel article à mâcher pour animal de compagnie (100) comprend plus de deux corps d'article à mâcher pour animal de compagnie allongés (10, 20, 30, 40), tels que par exemple trois, quatre, cinq ou six corps d'article à mâcher pour animal de compagnie (10, 20, 30, 40),
de préférence dans lequel les corps d'article à mâcher pour animal de compagnie (10, 20, 30, 40) s'étendent pratiquement parallèlement les uns aux autres,
mieux encore dans lequel deux adjacents (10, 20 ; 20, 30 ; 30, 40) parmi les multiples corps d'article à mâcher pour animal de compagnie (10, 20, 30, 40) sont connectés l'un à l'autre au niveau de leurs côtés latéraux respectifs d'une manière permettant que lesdits deux corps d'article à mâcher pour animal de compagnie adjacents (10, 20 ; 20, 30 ; 30, 40) puissent être déchirés l'un de l'autre.

13. Article à mâcher pour animal de compagnie (100) selon l'une quelconque des revendications précédentes, dans lequel au moins le premier corps d'article à mâcher pour animal de compagnie (10) et de préférence chacun des corps d'article à mâcher pour animal de compagnie (10, 20, 30, 40) de l'article à mâcher pour animal de compagnie (100) a une coupe transversale pratiquement en forme d'étoile ou en forme de fleur.

14. Procédé pour produire un article à mâcher pour animal de compagnie (100) de l'une quelconque des revendications précédentes,
lequel procédé comprend une étape de moulage par extrusion d'un produit profilé, ledit produit profilé formant l'article à mâcher pour animal de compagnie (100) ou un produit semi-fini pour former l'article à mâcher pour animal de compagnie (100),
de préférence l'utilisation d'une filière ayant une coupe transversale correspondant à un ou plusieurs articles à mâcher pour animal de compagnie (100) devant être formés, ledit article à mâcher pour animal de compagnie (100) devant être formé comprenant au moins un premier corps d'article à mâcher pour animal de compagnie allongé (10) et un deuxième corps d'article à mâcher pour animal de compagnie allongé (20), lesdits premier et deuxième corps d'article à mâcher pour animal de compagnie (10, 20) s'étendant pratiquement parallèles l'un à l'autre et étant connectés l'un à l'autre au niveau de leurs côtés latéraux.

15. Procédé selon la revendication 14,
dans lequel le profilé du produit extrudé est séparé, par exemple découpé, en articles à mâcher pour animal de compagnie (100) ayant une certaine longueur prédéterminée ; et/ou
dans lequel un matériau ou composition bioplastique fondu est forcé à travers une filière afin de former le produit profilé, lequel produit profilé est ensuite durci en étant laissé à refroidir,
de préférence dans lequel le matériau ou composition bioplastique est un matériau ou composition bioplastique biodégradable et/ou comestible, mieux encore un matériau ou composition bioplastique à base d'amidon ou de ce que l'on appelle l'amidon thermoplastique (TPS) ou l'amidon polymère, en particulier un matériau ou composition bioplastique à base de ce que l'on appelle l'amidon rendu non structuré ou l'amidon déstructuré.
